# EUROPEAN PATENT APPLICATION

(11) **EP 0 710 820 A1**
(43) Date of publication of application: **08.05.1996**
(21) Application number: 95307638.7
(22) Date of filing: 26.10.1995
(51) Int. Cl.: G01F 23/00

(54) **Fluid level detector and fluid level reporting system**

(30) Priority: 26.10.1994 GB 19940021523; 13.01.1995 GB 19950000701
(71) Applicant: SCULLY UK LIMITED, Winsford, Cheshire CW7 3PR (GB)
(72) Inventor: McKeown, Daniel J., Merseyside WA 12 9BA (GB); Hobgen, Philip, East Sussex TN38 9TE (GB); Basnet, Paul, Leigh, Lancashire WN7 2DS (GB); Lee, Anthony M., Rugeley, Staffordshire WS15 2AL (GB)
(74) Representative: Dawson, Elizabeth Ann, et al

(57) **Abstract**

A fluid level detector (10) sends electromagnetic signals indicative of fluid levels for use by a temote receiver (15), e.g: for an oil tank (11) located remote from a building. A fluid level reporting system includes a detector (10), a receiver (15), and a telephone interface for conveying fluid level information to remote equipment (17,18) e.g: at a suppliers' premises, using tone generation.

## Description

The present invention relates to fluid level detectors. The present invention also relates to a fluid level reporting system including a fluid level detector which conveys signals to a receiver from where they are conveyed to a central databank from which automatic re-ordering of fluid may be initiated. The present invention is particularly suitable for use in connection with fixed installation fuel oil tanks and other liquid fuel storage facilities including LPG storage tanks for central heating systems for buildings, fuel storage for cooking purposes, fuel storage for fleet vehicles and fuel storage for marine vessels.

A system is currently available for automatic re-ordering of fuel oil including a fuel level indicator which detects when the fuel level has reached a pre-determined level and transmits a signal via hard wires to trigger an automatic re-ordering system. An example of one such system is disclosed in European Patent EP-A-0260788 of Scully Signal Company. In certain circumstances, for example where the fuel oil tank is remote from a building, a hard wired system may be difficult, costly or inconvenient to install. Also, the currently available system uses a modem to communicate with the fuel oil supplier via the telephone network. Modems are relatively expensive.

The present invention provides a fluid level detector including a fluid level sensor and a transmitter for transmitting an electromagnetic signal (eg. radio frequency or microwave) indicative of fluid level. The detector may include a plurality of fluid level sensors at different levels. The or each sensor is preferably a two-state device for producing a first signal when the sensor is immersed in fluid and a second signal when the sensor is above the fluid. Preferably the transmitter transmits an identification signal in addition to fluid level information. The transmitter may have a separate housing from the sensor or sensors which is releasably attached to the sensor(s). Thus, the sensor or sensors may be positioned inside a fluid vessel with releasable connecting means extending from the vessel for attachment to the transmitter housing.

The invention also provides a fluid level reporting system including the aforementioned fluid level detector and a receiver for receiving the electromagnetic signals. The reporting system may include a plurality of fluid level detectors and a single receiver for receiving signals from all of the fluid level detectors. The receiver may be a portable device supplied to a filling operator. Thus, the detector may be used to signal the fluid level to the operator. The receiver could alert the operator, for example by means of an audible warning, that a fuel tank is full.

Alternatively, the receiver may be arranged to send information from the or each detector to remote equipment, for example via the telephone line. Thus, the remote receiver may be located in any location providing access to a telephone line, for instance in a building to which the fuel is supplied. Then the receiver, when it receives a signal from the transmitter, may trigger the automatic dialling of a telephone number, eg. at the supplier's offices. Thus, for instance, if the fluid level detector signals a low fluid level, the supplier can arrange a delivery of fuel to be made.

Any type of transmitter may be used as part of the fluid level detector. A suitable example is the type of transmitter used for operating car alarms.

Preferably the transmitter communicates to the receiver by sending a coded data stream which, when decoded, gives fluid level information and other data as required.

Another aspect of the invention provides a fluid level reporting system including one or more fluid level detectors having a fluid level sensor and a transmitter for transmitting a signal representing fluid level; and a receiver for said signal(s) including a telephone interface, whereby signals relating to fluid level may be conveyed to remote equipment by tone generation. Any system according to the invention may, for example, dial the supplier and convey information such as the name and address of a tank which requires re-filling. The receiver in a system according to the invention is preferably arranged to communicate with the remote equipment automatically when there is a change in the signals received from the or each detector. It may also communicate when no signal is received from a detector for a continuous period, which might indicate detector failure.

The transmitter of the invention may advantageously be a self contained unit which is battery powered. Likewise the receiver is preferably a self-contained unit linked to the public service telephone network, powered either by internal batteries or from the telephone line itself.

Embodiments of the invention will now be described by way of example only and with reference to the accompanying drawings in which:
Figure 1 is a schematic diagram of a fuel-level reporting system according to the invention;
Figure 2a is a front elevation showing the physical construction of the fuel level detector in the preferred embodiment;
Figure 2b is a view, similar to that in Figure 2a, of a fuel level detector according to an alternative embodiment;
Figure 2c is a block diagram of the components of the fuel level detector in the preferred embodiments;
Figure 2d is a flow diagram of the software in operation in the microprocessor in the preferred form of detector unit;
Figure 3 is a front elevation showing the physical construction of the receiver/dialler;
Figure 4a is a schematic block diagram showing the components of the receiver/dialler in more detail;
Figure 4b is a flow diagram of the software in operation in the microprocessor in the preferred form of receiver/dialler;
Figure 4c is a flow diagram related to that in Figure 4b;
Figure 5a shows, in block diagram form, the components of a suitable host call handling system; and Figure 5b is flow diagram illustrating the preferred operation of the supplier's or host computer.

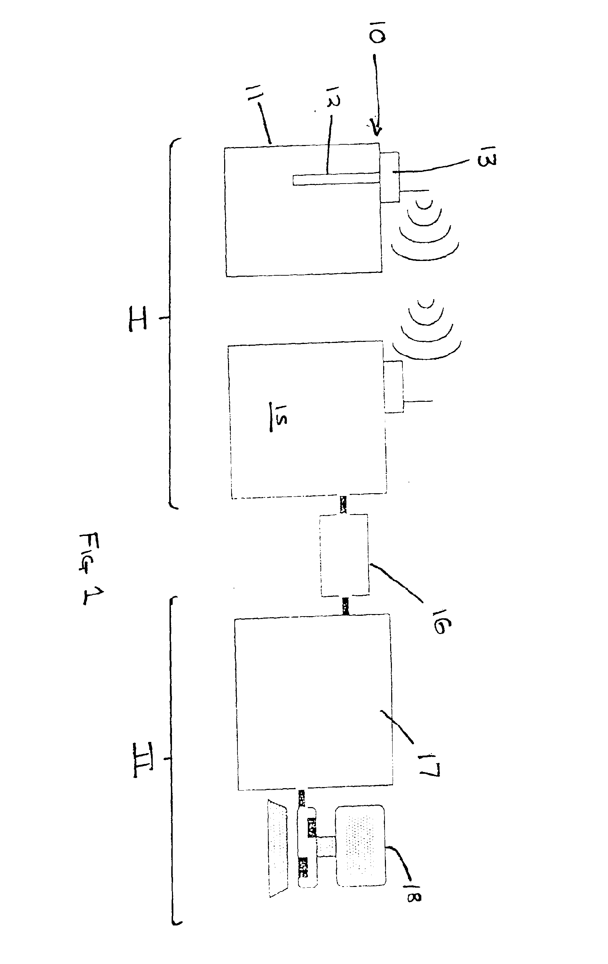

Referring firstly to figure 1 the illustrated fuel level reporting system includes customer equipment I and supplier equipment II connected via the telephone network. The customer equipment comprises a fuel level detector 10 installed on an oil tank 11. The fuel level detector 10 includes a probe switch or switches 12 and a signal transmitter 13. The single probe switch or each of the probe switches is able to detect when the fuel level passes a certain threshold and will be described in more detail below. When the fuel level passes a particular threshold, the relevant probe switch sends an electrical signal to the transmitter which sends an encoded radio frequency signal to a receiver/dialler unit 15 which may be installed in an adjacent building or other convenient location. The receiver/dialler 15 automatically makes contact with a receiver 17 at the supplier's premises via the public service telephone network 16, as described in detail below. Once the customer's receiver/dialler 15 and the supplier's receiver 17 are connected, the receiver/dialler sends an encoded message to the supplier using DTMF tones. Messages received by the supplier's receiver 17 are decoded and passed to the supplier's computer 18 which can identify the customer's name and address from the identification code which is decoded by the resident software on the computer 18 and this will initiate re-supplying the customer with fuel.

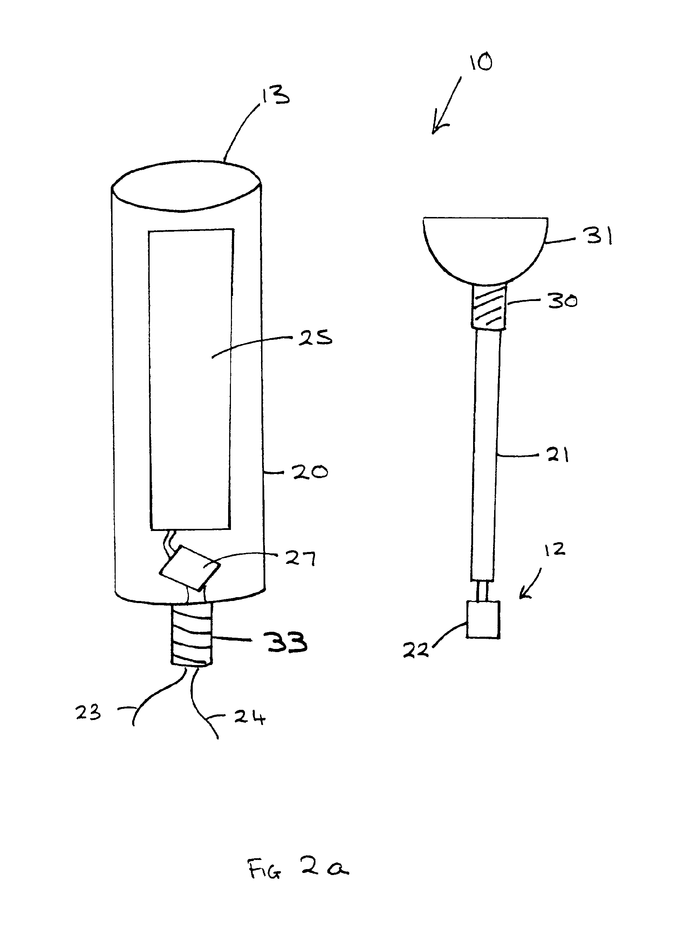

Figure 2a shows the fuel level detector, having a single probe switch 12, in more detail. The fuel level detector is constructed in two parts, namely a switch unit and separate signal transmitter unit 13. The electrical components are enclosed in a cylindrical housing 20, of the signal transmitter unti 13. The switch unit includes the probe switch 12 provided on a hollow shaft 21 which extends into the fuel in the tank 11 (see Figure 1). The probe switch includes a float 22 which is designed to float on the liquid fuel so as to be movable up and down in the orientation of Fig. 2a. When the fluid level rises or falls below a certain threshold, the float rises or falls accordingly and an electrical signal is provided via wires 23,24 which extend along shaft 21 to a circuit board 25 in the unit 13. A transmitter circuit on circuit board 25 is triggered as described below to transmit an r.f. signal via an aerial included on the board 25. A pre-built FM transmitter may be used for this purpose. The fuel level detector is powered by a battery 27 and is therefore completely self-contained.

The shaft 21 of the switch unit has a threaded portion 30 at its upper end which is arranged to be screwed into a tapped hole provided in the wall of the tank 11. Attached to the threaded portion 30 is a cup 31 having a tapped cylindrical opening communicating with the shaft 21. The cylindrical housing 21 has a hollow tube 33 extending from one end through which wires 23, 24 pass. Tube 33 has a threaded outer surface whereby it may be screwed into the tapped opening in cup 31.

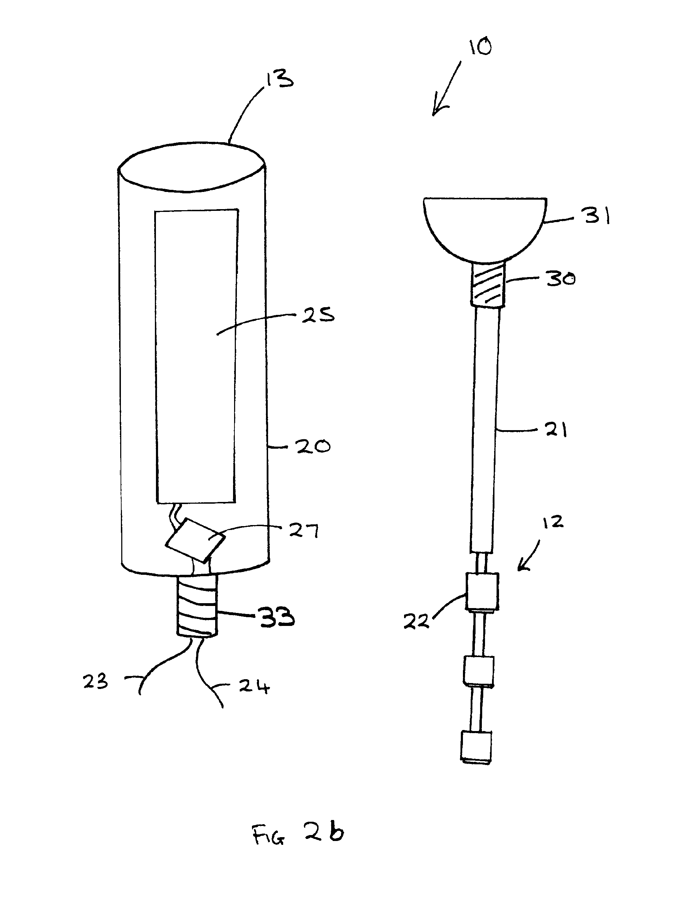

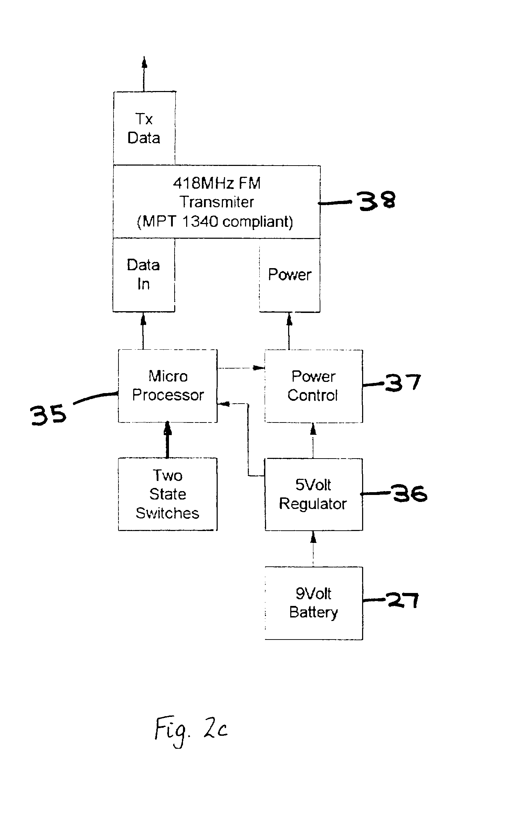

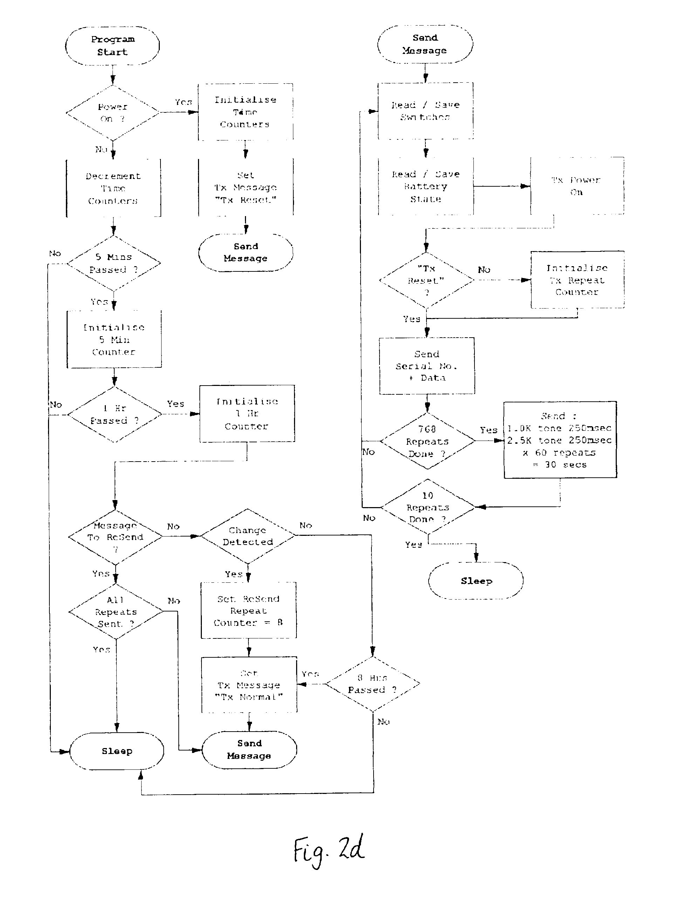

Figure 2b illustrates a fuel level detector similar to that shown in Figure 2a except that a plurality of float switches 22 are provided in a vertical stack whereby it is possible to monitor the fuel level over a greater range. As can be seen in Figure 2 a pair of wires 23, 24 are connected to circuit board 25 for each of the float switches 22. The circuitry within the fuel level detector 10 is arranged to be sensitive to a number of two-state switches, preferably up to eight such switches, and in the arrangement shown in Figure 2b the three fuel levels switches 22 are connected as three such switches. The two-state switches connected to float switches 22 are preferably configured 'normally open', this reflecting a 'dry' or 'alarm' condition. When 'wet' the switch should be held closed. Thus, a faulty probe would give an alarm condition. The provision of sensitivity to a number of two-state switches permits the inclusion of other sensors along with the fuel level detector, such as sensors to detect freezing conditions or a panic alarm button. The outputs from these switches are transmitted along with the fuel level information.

Figure 2c is a block diagram of the components of the detector unit 10. The detector comprises a microprocessor 35 having input thereto the outputs from the above-mentioned two-state switches. As shown a five volt regulator 36 is provided on the output of the nine volt battery 27 and provides power to the microprocessor. The microprocessor operates the power control 37 such that power is only applied to the transmitter 38 when it is required that a transmission should take place. In this way power consumption is minimised. Power consumption is further reduced by the microprocessor entering a low power consumption or "sleep" mode from which it is regularly "woken-up" in order to perform its functions. The transmitter 38 includes a data encoder.

The signals transmitted by the detector unit 10 would generally include an identification code provided by the data encoder to identify the detector unit and may also simply include the outputs from the two-state switches. A preferred format for the data transmitted by the detector unit 10 is shown in the following in which, as will be seen, a considerable amount of information is transferred.

A suitable data format for the information transmitted by detector unit 10 is set out below. The data encoder has a ten bit ternary address and eight bits of data which may be used as follows:
- Bit 0: Transmitter identification most significant bit.
- Bit 1: Transmitter identification least significant bit.
- Bit 2: Battery status "0" indicates ok.
- Bit 3: Probe 0. "0" indicates dry.
- Bit 4: Probe 1. "0" indicates dry.
- Bit 5: Probe 2. "0" indicates dry.
- Bit 6: Probe 3. "0" indicates dry.
- Bit 7: Spare - always set to 0.

When instructed to transmit, the encoder may transmit 3 packets, and repeat this until disabled, e.g. a pilot period (eg 6 1/6 bits) a sync period (2 bits) and a code period (18 bits) comprising the address and status information above.

Figure 2d is a flow diagram of one example of software which may be in operation in the microprocessor of the detector unit 10. As mentioned above the microprocessor is regularly put into a sleep mode and is woken up after a predetermined time period by a "watch dog timer". The power consumption is reduced during such sleep times as it is only necessary during such times to maintain the watchdog timer and the values of the various registers within the microprocessor.

Each time the microprocessor is activated the software begins at "program start". If a power on situation is detected, as opposed to a watch dog timer wake-up, the unit initialises the counters and turns on the transmitter to send a "transmission reset" message. The sending of messages is discussed in further detail below.

Each time a watch dog timer wake-up occurs the microprocessor updates some counters and then proceeds on the basis of the new values in the counters. In the embodiment illustrated if an hour has not passed since the switches were last checked then the microprocessor goes back to sleep. If an hour has passed the microprocessor checks to see if there are any messages to re-send and if so it sends them otherwise it looks to see if there is any change in the state of any of the two-state switches. If there is a change it sends a message indicative of this and in any event it sends a "transmission normal" message every eight hours.

The right hand side of Figure 2d illustrates the procedure which is performed each time a message is to be sent. Each time a message is sent all of the switch and battery data is read and saved and then the transmission power is turned on. The transmitter is instructed to transmit its data. Figure 2d shows an alternative in which the following is repeated ten times: the serial number and data as set out above is sent 768 times followed by 250 milliseconds of a 1 kilohertz tone and 250 milliseconds of a 2.5 kilohertz tone repeated 60 times.

This arrangement for transmitting the data is set up such that the receiver, described in detail below, is sure to be able to receive the data from the detector unit. The parameters within the above discussed software can be altered to fit the situation to which this invention is applied. In particular the watch time of 1 hour between checks on the status of the floats could be made much shorter so as to provide a quicker indication of changes in fuel level, depending on the particular application.

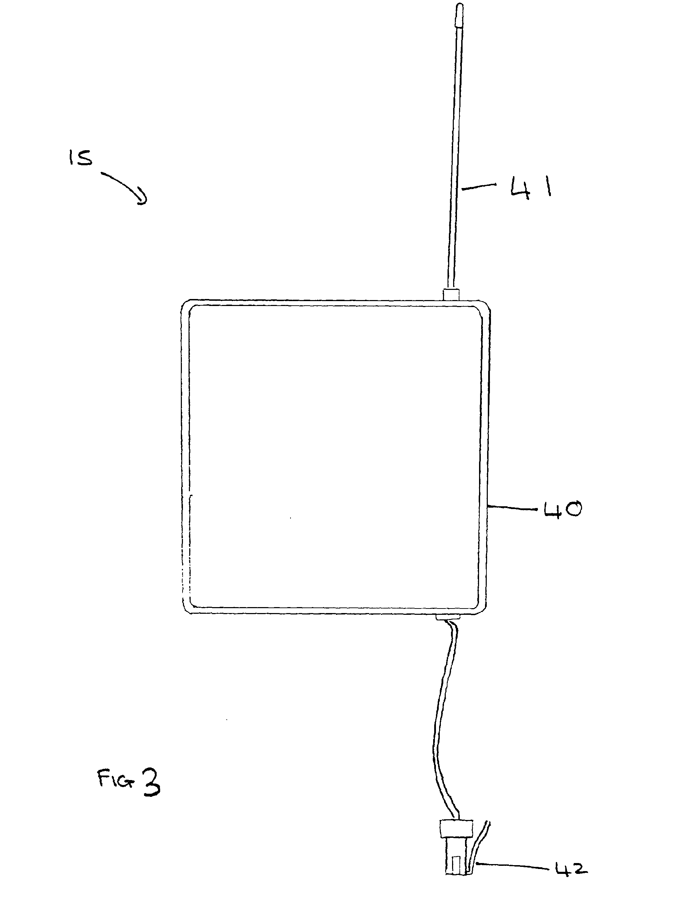

Figure 3 shows the receiver/dialler 15 which would typically be located in a customer's premises. This simply comprises a housing 40 enclosing various electrical components to be described below, an aerial 41 for receiving signals from the transmitter 13 and a plug 42 for insertion into the usual telephone wall socket together with the customer's telephone equipment, e.g. a facsimile machine, using a standard 'socket doubler'. Thus, the receiver/dialler is arranged with the customer's telephone equipment and the public service telephone network (PSTN) with the receiver/dialler circuitry and the telephone equipment being connected in parallel to the telephone line. It could be wall mounted, adjacent to the PSTN socket. The illustrated receiver/dialler is battery powered and has a sliding opening, not shown, for access to the battery compartment.

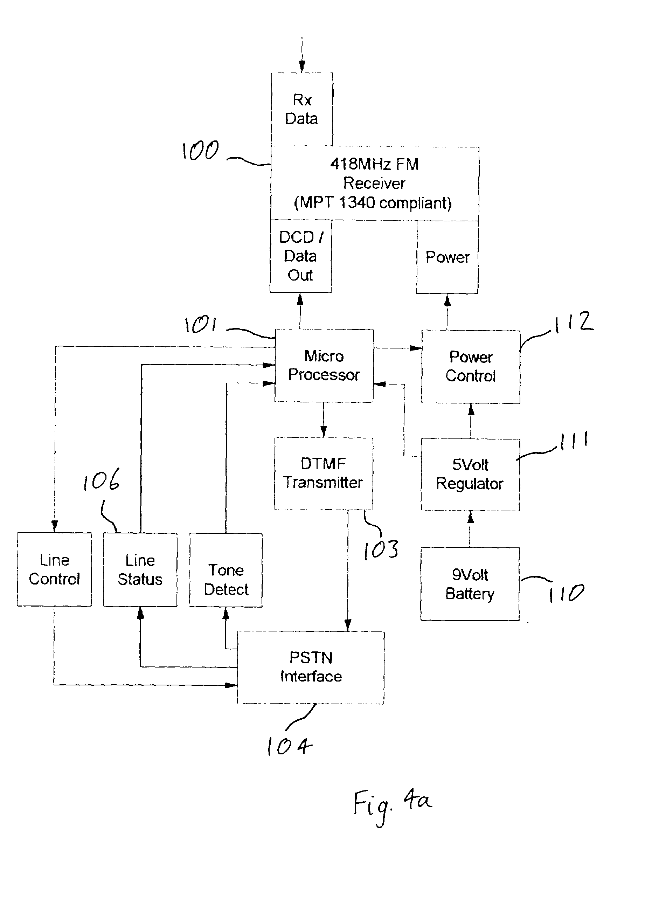

Figure 4a shows in block diagram form the components housed in the housing 40. R.F. signals are received by receiver section 100 which converts them into data recognisable by processor 101 which controls the operation of the receiver/dialler. Receiver section 100 typically includes address matching circuitry and a shift register for receiving and outputting the eight bits of data from the transmitter. The shift register keeps the data until it is clocked out or overwritten. The timing of the processor is controlled by a crystal oscillator. Circuitry 15 includes a DTMF generator 103 which signals via an audio transmitter within telephone interface 104 to dial the supplier. The signals are passed along the telephone network.

The receiver dialler may be arranged to handle communications from several transmitter units for certain applications. For example, the invention may be used at fuel filling stations having different tanks containing different types of fuel. With each transmitter transmitting in relatively short bursts with long intervals between bursts, the probability of two tank transmitters transmitting at the same time is small and it is sufficient for the receiver/dialler to have one shift register for data from the particular transmitter which is transmitting. Even if two transmitters were synchronised, by coincidence, they would soon become out of sync due to inherent inaccuracies in their respective clocks.

The supplier's receiving equipment preferably couples the receiver/dialler 15 to the supplier's computer via suitable call receiving equipment to be described below. Received audio signals, such as acknowledgement tones and data, are passed back to the processor via a decoder if necessary.

Line status unit 106 monitors other incoming calls and indicates to the processor 101 that the line is engaged, by detecting speech signals, or that telephone equipment connected to the same line is off-hook or ringing.

Receiver dialler 15 is powered by battery 110 connected to regulator 111, which supplies power to receiver section via power control module 112. Processor 101 may also control a battery test facility.

The receiver/dialler may alternatively be powered from the telephone line.

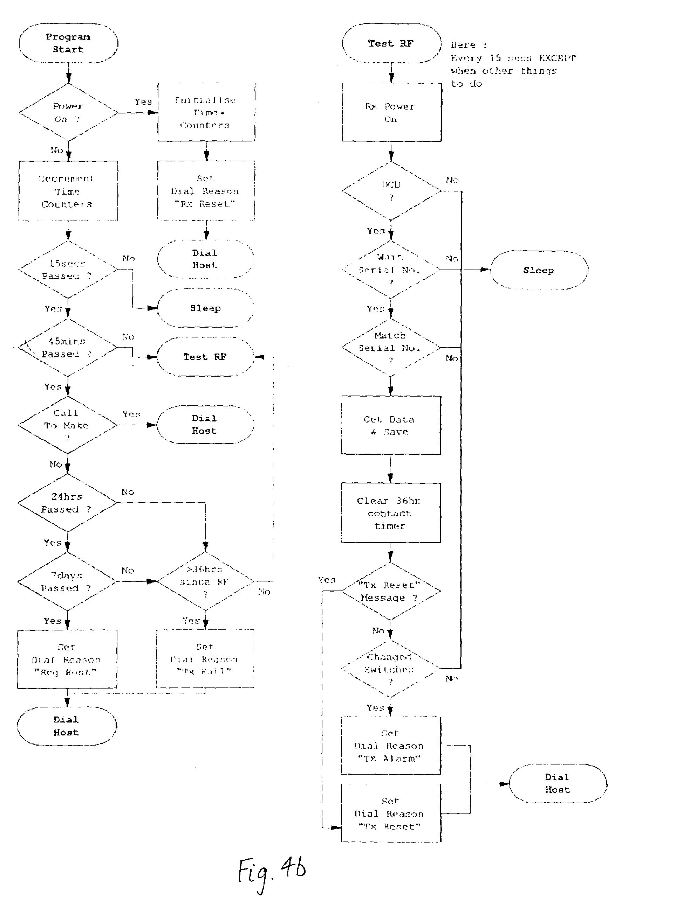

Figure 4b illustrates a flow-diagram of an example of software suitable for operation in microprocessor 101 in the receiver/dialler illustrated in Figure 4a. Within this unit also certain procedures are undertaken to reduce power consumption. One is that the microprocessor only switches power to the receiver and the DTMF transmitter when required and also the microprocessor 101 regularly enters a sleep mode from which it is woken up by a watch dog timer, in a similar way to that described above for the detector unit.

Each time the microprocessor is activated the software begins at "program start" in Figure 4b. If the activation is a power on situation, as opposed to a watchdog time wake up the unit turns on the DTMF power and dials the suppliers computer and sends a "receiver reset" message using DTMF tones.

Each time a watchdog timer wake-up occurs the microprocessor updates counters and based on the new values of the counters it performs one of the following.

If 15 seconds have not passed since it was last active the microprocessor goes back to sleep. If 15 seconds have passed the microprocessor switches to test to see if there is any received data and this will be discussed further below. If 45 minutes have passed and there are calls to make these calls are made. Otherwise the microprocessor will initiate a "transmission failed" call if there has been no valid R.F. reception from the detector unit 10 for 36 hours, or it will initiate a regular host call if seven days have passed since the last regular host contact.

The right hand side of Figure 4b is a flow-chart for a suitable procedure to detect whether data is being transmitted by the detector unit 10. The receiver power is switched on and if no data is received or if the serial number for the expected detector is not received then the sleep mode is entered again. If the serial number of the expected detector is matched then the incoming data is saved, the 36 hour contact timer is cleared and a message is sent. If it is a transmission reset message which is received from the detector unit 10 then this message is passed on. Otherwise the software checks to see whether any of the switches at the detector units have changed their state and if they have then details of this are dialled through to the supplier's computer.

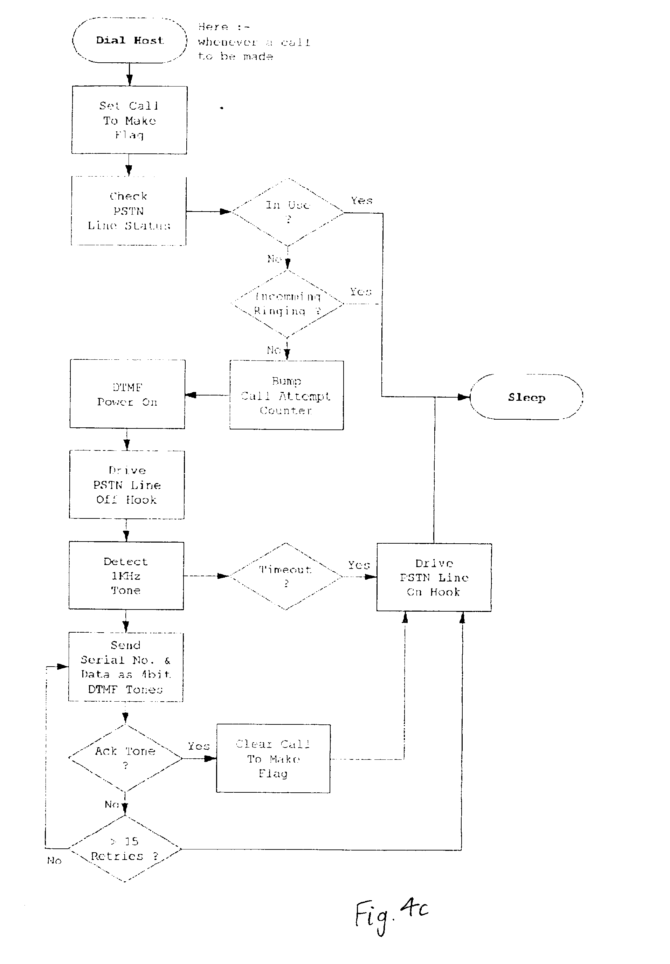

Figure 4c illustrates, in flow-chart form, one example of operation of the receiver/dialler when it is required that the suppliers, or host, computer is dialled to pass on a message. The microprocessor firstly checks the status of the telephone line, and, if it is clear, it seizes the line itself putting the line "off-hook". The host computer is then dialled either by way of tone dialling, by using the DTMF generator, or alternatively by pulse dialling. The receiver/dialler then waits for a confirmation tone to be received from the host computer, which, may be simply a 1 kilohertz tone. Once the confirmation signal is received the software proceeds to send the receiver/dialler serial number and data as required, as described in more detail below. The receiver/dialler then waits to see if an acknowledgement tone is received, may be again a 1 kilohertz tone, and if the acknowledgement tone is not received will re-send the data up to a maximum of sixteen times. If an acknowledgement tone is received the call is terminated, the DTMF power is turned off and the microprocessor enters its sleep mode.

A suitable data format for the information sent by the receiver/dialler via the telephone line is set out below. This example is for a system including four tank transmitters each having four fluid level sensors communicating with a receiver/dialler.

| | |
|---|---|
| 2 characters: | Call Validation |
| 6 characters: | Receiver/dialler identification number |
| 2 characters: | Call reason |
| 2 characters: | Transmitter status (e.g. transmitter installed/signal lost). |
| 2 characters: | Receiver/dialler battery status |
| 2 characters: | Transmitter 1 battery status & sensors wet/dry status |
| 2 characters: | Transmitter 2 battery status & sensors wet/dry status |
| 2 characters: | Transmitter 4 battery status & sensors wet/dry status |
| 8 characters: | Spare |
| 2 characters: | Last byte always set to 0. |

Each item in the above is a single hexadecimal character representing a four bit binary number i.e. half a byte. The first two characters are always set to a particular hexadecimal number to indicate a valid call, which will be recognised by the supplier's equipment. The first six characters, represent a 24 bit serial number, which this time identifies the particular receiver/dialler. The remaining data characters as can be seen from the above represent certain items of data which is desired to transmit to the host computer. In particular the status of the switches of the detector unit 10 are sent on to the host computer. In the preferred format above it can seen that additional data is sent i) stating the reason that the call is being made, and ii) giving information as to the status of the batteries in the detector unit and, if present, in the receiver/dialler.

For example, the following call reasons are available:
- 00: Repeat call
- 01: Receiver/dialler power on reset
- 02: Transmitter installation
- 03: Regular receiver/dialler contact
- 04: Transmitter signal lost
- 05: Transmitter signal found
- 06: Tank wet
- 07: Tank dry
- 08: Transmitter battery low
- 09: Transmitter battery ok
- 10: Receiver/dialler battery low
- 11: Receiver/dialler battery ok

Additional call reasons are available within the two hexadecimal character provided.

The two characters for transmitter (Tx) status information may be eight pre set bits as follows:
- Bit 8=1:: Tx 4 installed
- Bit 7=1:: Tx 3 installed
- Bit 6=1:: Tx 2 installed
- Bit 5=1:: Tx 1 installed
- Bit 4=1:: Tx 4 signal lost
- Bit 3=1:: Tx 3 signal lost
- Bit 2=1:: Tx 2 signal lost
- Bit 1=1:: Tx 1 signal lost

The eight bits represent a binary number which is converted to two hexadecimal characters for transmission. Similarly, the two characters for each transmitter are set as eight bits and then converted to hexadecimal for transmission.

If one considers the above described operations of the detector unit 10 and the receiver/dialler 15 in combination it will be understood that the operation of the receiver/dialler in which a check is made to see if a transmission is occurring every 15 seconds, ensures that whenever a transmission does occur it is received. As described with reference to the detector unit, every transmitted data is repeated a number of times during transmission such that the overall transmission lasts for a period of time which, in this embodiment, may be in the range 30 seconds to two minutes. Therefore the checking by the receiver/dialler every 15 seconds is clearly frequently enough to ensure that any transmission is properly received.

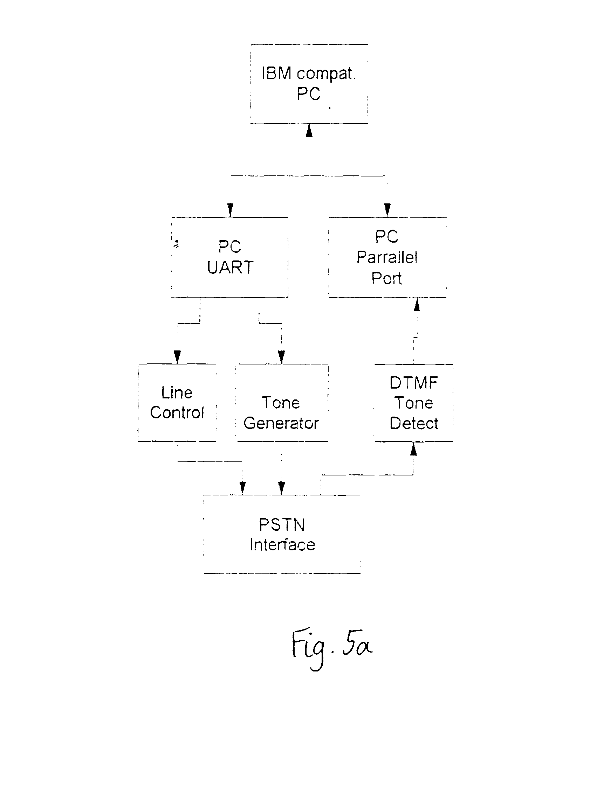

Figure 5a is a block diagram representing the structure of the apparatus connecting the telephone line at the supplier's premises to the suppliers computer in the preferred embodiment. The preferred notation for this apparatus is a transponder, and this transponder basically comprises a standard IBM compatible PC which is provided with an internal card which interfaces one of the PC's serial ports and a parallel port to the dedicated phone line. As can be seen from Figure 5a the transmission side of the transponder includes a line control unit and a tone generator and the receiver side of the transponder includes a DTMF tone detector unit. Software running on the PC controls all the handling of the calls from the receiver/dialler or receiver/diallers.

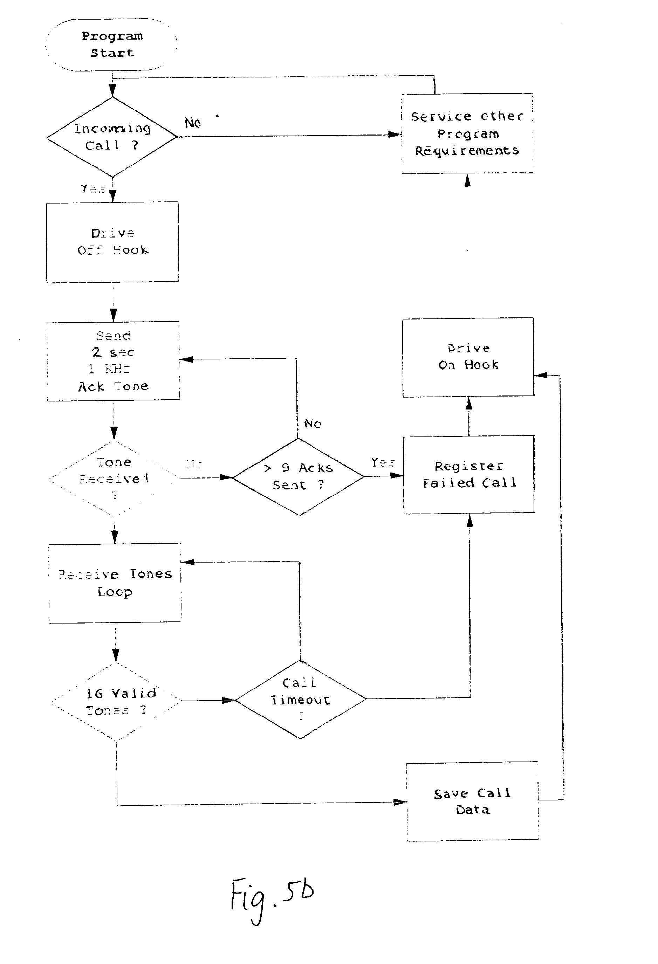

When an incoming call is detected the software causes the line to be answered and a set frequency tone is generated for 2 seconds. As will be recalled such a tone is what is expected by the receiver/dialler as an acknowledgement signal that the line has been answered. The PC then waits for 10 seconds to see if DTMF tones are received and if they are not received further tones are transmitted up to a maximum of ten. If still no DTMF tones are received a failed called is registered and the phone line is released. If DTMF tones are detected the software builds them into a valid group and checks the error checking code. Once a valid data search is received, which, in this embodiment, will comprise 16 hexadecimal characters, another is generated as the acknowledgement tone and the call is terminated. The received data is stored and can be decoded according to the above mentioned coding system and analysed by the supplier's computer software. A flow diagram of this operation is provided as Figure 5b.

As will be appreciated from the earlier description this analysis of the received data can be simply to detect when the fuel level in a tank is at a low level such that fuel needs to be supplied to the tank. Alternatively, more complex monitoring of the fuel level can be arranged, which may be useful for such purposes as maintaining an on-going profile of fuel usage or for charging purposes.

The receiver/dialler may be programmed to dial an alternative number if several calls to the usual supplier's equipment are unsuccessful. This could provide a backup in the event of a failure of the supplier's equipment.

As will be appreciated from the above description the preferred embodiment provides the important features of this invention, that is a reliable form of fuel level detector which communicates in a wireless fashion with a dialler unit which passes on information as to the fuel level to a supplier's computer. The preferred embodiment implements this invention in such a way which has additional advantages, in particular concerning the use of power saving measures and standard DTMF tones to encode the data to facilitate transmission.

## Claims

1. A fluid level detector including a fluid level sensor and a transmitter for transmitting an electromagnetic signal indicative of fluid level.

2. A fluid level detector as claimed in claim 1 including a plurality of fluid level sensors at different levels.

3. A fluid level detector as claimed in claim 1 or 2 in which the or each sensor is a two state device for producing a first signal when the sensor is immersed in fluid and a second signal when the sensor is above the fluid.

4. A fluid level detector as claimed in any preceding claim in which the transmitter also transmits an identification signal.

5. A fluid level detector as claimed in any preceding claim in which the transmitter has a separate housing from the sensor(s) which is releasably attached to the sensor(s).

6. A fluid level reporting system including a fluid level detector as claimed in any preceding claim and a receiver for receiving electromagnetic signals from the transmitter.

7. A fluid level reporting system as claimed in claim 6 including a plurality of fluid level detectors and a single receiver for receiving sugnals from all of the fluid level detectors.

8. A fluid level reporting system as claimed in claim 6 or 7 in which the receiver is arranged to send fluid level data from the or each detector to remote equipment.

9. A fluid level reporting system as climed in clim 8 in which the receiver includes a telephone interface.

10. A fluid level reporting system as climed in claim 8 or 9 in which the remote equipment includes a telephone interface.

11. A fluid level reporting system including one or more fluid level detectors having a fluid level sensor and a transmitter for transmitting a signal representing fluid level; and a receiver for said signal(s) including a telephone interface, whereby signals relating to fluid level may be conveyed to remote equipment by tone generation.

12. A fluid level reporting system as claimed in claims 8 to 11, in which the receiver is arranged to communicate with the remote equipment automatically when there is a change in the signal(s) received from the or each detector.

13. A fluid level reporting system as climed in any of claims 8 to 12 in which the receiver is arranged to communicate with the remote equipment automatically when it receives no signals from a detector during a predetermined time period.

14. A fluid level reporting system as claimed in any of claims 6 to 13 in which the or each detector is arranged to transmit signals repeatedly in short bursts with long intervals between each burst.

15. A fluid level reporting system as claimed in claim 14 in which receiver interogates the or each detector at regular intervals for predetermined periods of time, the intervals being shorter than the duration of the signal bursts from the detectors.

16. A fluid level reporting system substantially as herein before described with reference to the accompanying drawings.
